Europäisches Patentamt

(19) European Patent Office

Office européen des brevets

(11) Numéro de publication : **0 355 936 B1**

# (12) FASCICULE DE BREVET EUROPEEN

(45) Date de publication du fascicule du brevet :
**21.11.91 Bulletin 91/47**

(51) Int. Cl.$^5$ : **F16D 55/22, F16D 55/224**

(21) Numéro de dépôt : **89202698.0**

(22) Date de dépôt : **31.05.88**

(54) **Ressort pour frein à disque et frein à disque équipé d'un tel ressort.**

(30) Priorité : **02.06.87 FR 8707677**

(43) Date de publication de la demande :
**28.02.90 Bulletin 90/09**

(45) Mention de la délivrance du brevet :
**21.11.91 Bulletin 91/47**

(84) Etats contractants désignés :
**BE DE ES FR GB IT**

(56) Documents cités :
**EP-A- 0 190 956
EP-A- 0 203 841
DE-A- 3 244 790
DE-A- 3 533 931
FR-A- 2 295 300
GB-A- 2 012 012
GB-A- 2 150 241**

(60) Numéro de publication de la demande initiale
en application de l'article 76 CBE : **0 294 286**

(73) Titulaire : **BENDIX EUROPE Services
Techniques S.A.
126 rue de Stalingrad
F-93700 Drancy (FR)**

(72) Inventeur : **Pindat, Michel Bendix France
126 rue de Stalingrad
F-93700 Drancy (FR)**

(74) Mandataire : **Lejet, Christian et al
Bendix Europe Service Techniques Service
Brevets 126 rue de Stalingrad
F-93700 Drancy (FR)**

EP 0 355 936 B1

Jouve, 18, rue Saint-Denis, 75001 PARIS

## Description

L'invention a pour objet un ressort pour frein à disque à étrier coulissant ainsi qu'un frein à disque équipé d'un tel ressort.

L'invention vise plus particulièrement un ressort destiné à équiper un frein à disque dont l'étrier coulisse par rapport à un support fixe au moyen d'au moins deux surfaces complémentaires de coulissement axial formées sur l'étrier et sur le support fixe et qui sont maintenues en contact par des moyens élastiques.

On connaît du brevet FR-A-2,582,365 un ressort pour frein à disque du type comportant un étrier monté coulissant parallèlement à l'axe d'un disque tournant, sur un support fixe au moyen d'au moins deux surfaces de coulissement axial formées sur l'étrier et sur le support fixe et maintenues élastiquement en contact, et deux organes de friction reçus en ancrage et en coulissement axial dans une ouverture dudit support fixe pour venir en engagement de friction avec les faces opposées dudit disque, lors de l'actionnement d'un moteur de frein, ledit ressort étant monté élastiquement dans une ouverture formée dans la voûte de l'étrier et exerçant sur les plaques de support desdits organes de friction, un effort radial dirigé sensiblement selon un rayon du disque et en direction de l'axe de ce dernier, et un effort tangentiel perpendiculaire audit effort radial pour solliciter chacun des organes de friction tangentiellement à la circonférence dudit disque pour assurer le maintien de ces derniers dans une position latérale préférentielle. Ce ressort est caractérisé en ce qu'il est constitué d'une lame métallique pliée comportant une portion de montage reliée élastiquement par ses côtés circonférentiellement espacés à deux portions d'action rigide, une première portion rigide s'étendant parallèlement à l'axe du disque et susceptible de solliciter élastiquement par ses deux extrémités libres desdites plaques de support dans une direction sensiblement circonférentielle, une deuxième desdites portions rigides s'étendant également parallèlement à l'axe du disque et susceptible de solliciter élastiquement par ses deux extrémités libres lesdites plaques de support sensiblement radialement vers l'axe du disque.

Avec un tel agencement, le ressort maintenu par sa portion de montage dans l'ouverture formée dans la voûte de l'étrier sollicite par chacune de ses portions rigides les plaques de support, les liaisons élastiques entre la portion de montage et chacune des deux portions d'action rigide pouvant être modifiée à volonté pour obtenir les efforts radiaux et tangentiels voulus.

Lorsqu'on utilise un frein à disque équipé du ressort décrit au brevet précité, et qu'on retire les organes de friction du frein, par exemple pour les échanger contre des organes de friction neufs, on a observé qu'une extrémité libre d'au moins une des portions fixes du ressort peut venir porter sur un capuchon ou soufflet d'étanchéité en matière souple du piston du moteur de frein, capuchon qui s'étire vers le disque au fur et à mesure de l'usure de la garniture de l'organe de friction actionné directement par ce moteur de frein. Ce contact du ressort sur ce capuchon en matière souple peut provoquer une détérioration du capuchon et, par là, une perte d'étanchéité du moteur de frein.

Par ailleurs, chaque portion rigide du ressort décrit au brevet précité présente deux extrémités libres dont chacune s'appuie sur une plaque de support associée d'un organe de friction. L'usure progressive de celui-ci a pour effet de le rapprocher du plan médian du ressort du frein, ce qui déplace la plage de contact de la portion rigide avec la plaque de support, d'une extrémité libre de la portion rigide vers la partie médiane de celle-ci. Cette partie médiane se raccorde à la portion élastique associée du ressort suivant un profil qui donne à la partie rigide une largeur croissante, suivant l'axe du disque, d'une extrémité libre vers la partie médiane de la portion rigide. La plus grande largeur de cette partie a pour effet d'accroître localement sa raideur. Il en résulte que l'effort exercé par la portion rigide sur un organe de friction associé s'accroît en même temps que l'usure de la garniture de l'organe de friction. Le frottement qui en résulte lorsque le moteur du frein repousse les garnitures vers le disque lors d'un freinage, s'accroît dont avec l'usure des garnitures. Un frottement exagéré peut gêner le coulissement de l'étrier, au point de provoquer une usure dissymétrique des garnitures. Une telle usure est à éviter car elle entraîne un remplacement prématuré des organes de friction. En outre cette raideur accrue peut provoquer l'écrasement de la partie médiane de la portion rigide sous l'effort de réaction reçu des organes de friction. La déformation permanente du ressort qui en résulte est aussi à éviter.

La présente invention a donc pour but de réaliser un ressort pour frein à disque, du type décrit au brevet précité, qui ne présente pas les inconvénients mentionnés ci-dessus.

L'invention propose donc un ressort pour frein à disque du type comportant un étrier monté coulissant parallèlement à l'axe d'un disque tournant sur un support fixe et deux organes de friction reçus en ancrage et en coulissement dans une ouverture dudit support fixe, pour venir en engagement de friction avec les faces opposées dudit disque lors de l'actionnement d'un moteur de frein, ledit ressort étant monté élastiquement dans une ouverture formée dans la voûte de l'étrier pour charger chacun des organes de friction, ce ressort étant constitué d'une lame métallique pliée comportant une portion de montage reliée par une portion élastique à une portion d'action rigide s'étendant parallèlement à l'axe du disque pour solliciter élastiquement lesdits organes de friction, ce ressort étant caractérisé en ce qu'une patte déborde de la portion d'action rigide de manière que, lorsque les organes de friction sont retirés du frein, cette patte bute élastiquement sur une surface du frein agencée pour maintenir la portion rigide à l'écart d'un contact avec une partie fragile du frein.

De préférence, une fente transversale parallèle à la portion rigide est découpée dans la portion élastique à proximité de cette portion rigide, de manière à réduire la charge appliquée par le ressort aux organes de friction quand ceux-ci se rapprochent du plan médian du ressort du fait de l'usure de ces organes, comme décrit dans la demande de brevet européen initiale EP-A-0294286 (publiée le 07.12.88).

Au dessin annexé, donné seulement à titre d'exemple :

— la Figure 1 est une vue en élévation d'un frein à disque équipé d'un ressort suivant l'invention ;

— la Figure 2 est une vue en perspective qui illustre la coopération du ressort suivant l'invention avec des organes de friction du frein de la Figure 1 ;

— la Figure 3 est une vue en coupe partielle, suivant le trait de coupe III-III de la Figure 1 ;

— la Figure 4 est une vue similaire à celle de la Figure 3, prise alors que le frein de la Figure 1 est débarrassé de ses organes de friction et

— la Figure 5 est une vue partielle en coupe, suivant le trait de coupe V-V de la Figure 1, qui illustre le fonctionnement du ressort suivant l'invention.

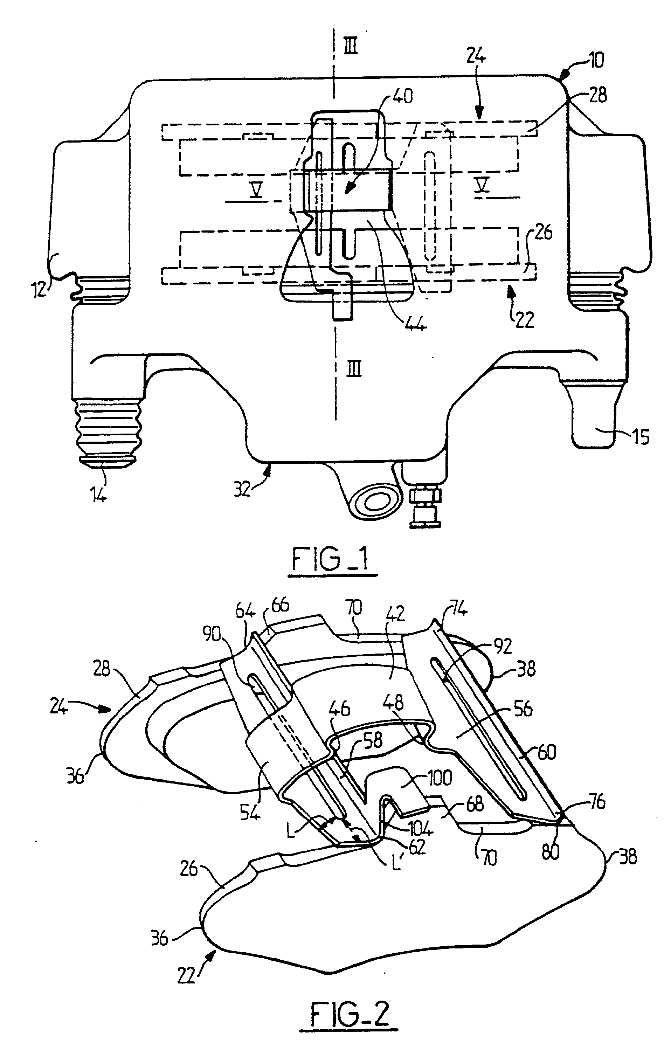

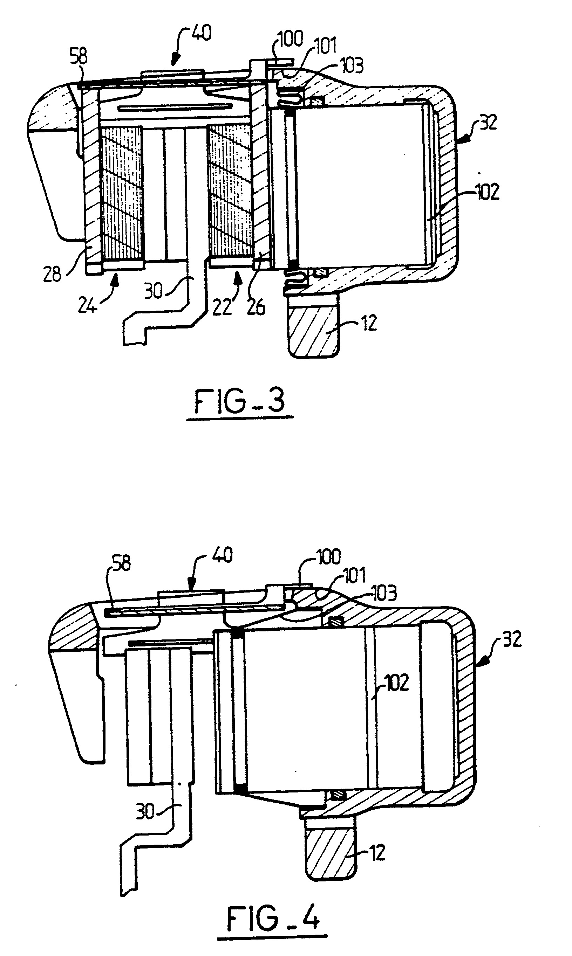

Le frein à disque représenté à la Figure 1 est du type comportant un étrier 10, monté coulissant sur un support fixe 12, au moyen de deux colonnettes axiales 14 et 15. Le frein à disque comporte en outre deux organes de friction 22 et 24, munis respectivement de plaques de support 26 et 28, susceptibles de venir en engagement de friction avec un disque tournant 30, (voir Figures 3 et 4), lors de l'actionnement d'un moteur hydraulique de frein 32. Les organes de friction 22 et 24 sont reçus en ancrage et en coulissement dans une ouverture formée dans le support fixe 12. Dans l'exemple représenté, les deux organes de friction 22 et 24 ont chacun des extrémités 36 et 38 possédant un profil circulaire coopérant avec des profils circulaires complémentaires du support fixe 12. Un tel type d'organe de friction est décrit et représenté plus en détail dans le brevet européen EP-A-0002399. Pour ce type d'organe de friction, il est souhaitable d'exercer sur la plaque de support un effort tangentiel qui maintienne cette dernière dans une position latérale préférentielle, en appui dans l'ouverture ménagé dans le support fixe 12.

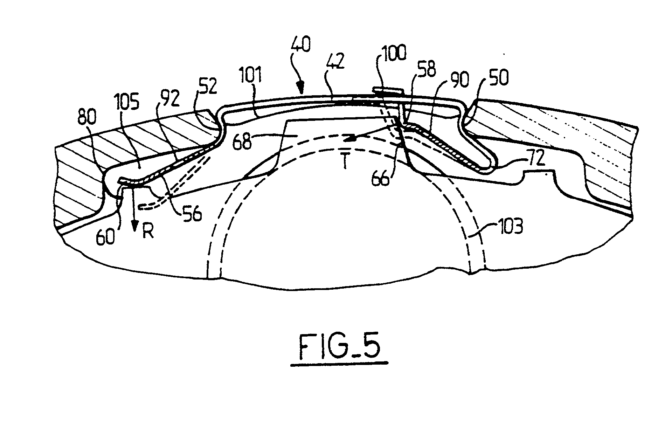

Le frein à disque représenté à la Figure 1 est muni d'un ressort 40 réalisé selon la présente invention. Pour la description du ressort 40, on se reportera notamment aux Figures 2 et 5. Le ressort 40 est constitué d'une lame métallique pliée qui comprend une portion de montage 42 ayant la forme générale de la lettre grecque oméga montée élastiquement dans une ouverture 44 formée dans la voûte de l'étrier 10. Les côtés circonférentiellement espacés 46 et 48 formant les parties resserrées de la lettre oméga coopèrent avec des bords circonférentiellement espacés 50 et 52 de l'ouverture 44. Les côtés circonférentiellement espacés 46 et 48 sont prolongés par des portions élastiques 54 et 56 respectivement. Ces portions élastiques 54 et 56 se terminent par deux portions rigides 58 et 60 qui s'étendent axialement de part et d'autres de la portion élastique correspondante 54 ou 56 respectivement. Une première portion rigide 58 associée à la portion élastique 54 présente deux extrémités libres 62, 64 qui sollicitent chacune des plaques support 26, 28 sensiblement circonférentiellement (voir Figure 5), par coopération avec des surfaces d'appui 66 formées sur le flanc d'une saillie 68 formée sur le côté périphérique 70 de chacune des plaques support 26 et 28. Comme on le voit sur les Figures 2 et 5, la portion rigide 58 a la forme d'une gouttière, la portion élastique 54 correspondante formant un pli arrondi prononcé 72 (voir Figure 5) de manière à permettre à la portion rigide 58 de solliciter la saillie 68 en dehors de la zone occupée par les organes de friction et par le disque. D'une façon similaire, la portion rigide 60 a la forme d'une gouttière et comporte deux extrémités libres 74 et 76 qui coopèrent avec des surfaces d'appui 80 sensiblement circonférentielles formées sur le côté périphérique 70 des plaques de support 26 et 28. En se reportant à la Figure 5, on voit que la première portion rigide 58, grâce au pli 72, exerce sur la surface 66 un effort sensiblement tangentiel T. D'une façon similaire, la deuxième portion rigide 60 exerce sur la surface 80, un effort sensiblement radial R.

Le rôle de ces deux efforts est expliqué en détail dans le brevet FR-A-2,582,365 précité, auquel on pourra se reporter pour obtenir des précisions à ce sujet. D'une manière générale le ressort 40, encliqueté dans l'ouverture 44 de la voûte de l'étrier par sa portion en oméga assure, grâce à ces efforts, les fonctions de ressort anti-bruit et de maintien en position latérale préférentielle des organes de friction.

On remarquera, sur la Figure 2, qu'une patte 100 déborde latéralement et verticalement d'une extrémité de la portion rigide 58 du ressort. En se référant aux Figures 3 et 4 du dessin, il est clair que cette patte déborde du ressort du côté où se trouve le moteur de frein 32.

Sur la coupe axiale de la Figure 3 qui représente un frein à disque équipé d'organes de friction, et du ressort suivant l'invention, il apparaît que cette patte est alors écartée de la surface supérieure 101 du moteur de frein 32, du fait de la réaction à l'effort T exercé sur la portion rigide 58 du ressort par les plaques support 26 et 28 (voir aussi la Figure 5).

Le moteur de frein représenté en coupe aux Figures 3 et 4 comprend un piston 102 agencé pour agir sur la plaque de support 26 de l'organe de friction 22, lors d'un freinage. Un capuchon 103 en matière souple assure l'étanchéité du cylindre du moteur 32 qui reçoit le piston, lorsque ce dernier coulisse dans le cylindre pendant un freinage.

A la Figure 4, le frein à disque est représenté sans ses organes de friction, le piston sorti et le capuchon 103 déployé, comme c'est le cas lorsqu'on intervient sur le frein pour remplacer des organes de friction usés. Dans cet état la portion rigide 58 du ressort 40 n'est plus repoussé vers le haut par les plaques de support sur lesquelles elle reposait avant l'extraction des organes de friction. Quand le ressort n'est pas muni de la patte 100, comme c'est le cas du ressort décrit au brevet précité, la portion rigide 58 peut venir alors s'appuyer accidentellement sur le capuchon 103 au risque de cisailler celui-ci du fait qu'il est constitué en une matière frangible telle qu'un caoutchouc synthétique.

La patte 100 permet d'éviter cet accident. Il apparaît en effet sur la Figure 4 et sur la Figure 5 (position repérée en trait interrompu) qu'en l'absence d'organes de friction, la patte vient reposer sur la surface supérieure 101 du moteur de frein en maintenant ainsi la portion rigide 58 du ressort à l'écart du capuchon 103 du moteur de frein.

On prévoit dans le ressort, parallèlement à l'axe du disque sur lequel agit le frein de la Figure 1, des fentes transversales 90, 92 formées au voisinage des portions rigides 58, 60, respectivement, du côté des portions élastiques 54, 56, respectivement (voir Figure 2). Ces fentes ont pour effet de diminuer la raideur du ressort dans sa partie centrale, au droit des portions élastiques 54 et 56. Les effort appliqués aux plaques de support 26, 28 par le ressort lorsque les organes de friction se rapprochent du plan médian du ressort, au fur et à mesure de leur usure, sont alors diminués par rapport aux efforts qui seraient appliqués en l'absence de ces fentes.

Il faut noter en outre que, le poids des organes de friction diminuant quand leur usure s'accroît, on peut tenir compte de cette diminution dans l'ajustement de la raideur du ressort à l'aide de ces fentes, de manière à réduire encore les frottements qui s'opposent au bon fonctionnement du frein à disque équipé du ressort suivant l'invention. L'homme de métier saura tirer parti de cette observation pour ajuster correctement les dimensions et la position de ces fentes, par le simple jeu de ses connaissances normales. On notera à ce sujet que plus la distance "L" (voir Figure 2) qui sépare une extrémité de la fente 90 du droit du contour de la portion élastique 54 par exemple, est petite, plus la raideur de la partie centrale de la portion rigide 58 est faible. De même, plus le rayon de courbure du pli arrondi 72 est grand, plus la portion rigide 58, dans son ensemble, prend de la souplesse.

Sur la Figure 2 il apparaît que la patte 100 et la fente 90 sont formées de part et d'autre de la portion rigide 58. La patte déborde d'abord verticalement (du point de vue de la Figure 2) de cette portion rigide par une partie de liaison sensiblement radiale 104, de la partie supérieure de laquelle s'étend l'extrémité plane et horizontale de la patte 100 proprement dite, qui déborde latéralement de la plaque de support 26 vers la surface supérieure 101 du moteur de frein.

## Revendications

1. Ressort (40) pour frein à disque du type comportant un étrier (10) monté coulissant parallèlement à l'axe d'un disque tournant sur un support fixe (12) et deux organes de friction (12, 24) reçus en ancrage et en coulissement dans une ouverture dudit support fixe (12), pour venir en engagement de friction avec les faces opposées dudit disque (30) lors de l'actionnement d'un moteur de frein (32), ledit ressort (40) étant monté élastiquement dans une ouverture (44) formée dans la voûte de l'étrier (10) pour charger chacun des organes de friction, ce ressort étant constitué d'une lame métallique pliée comportant une portion de montage (42) reliée par une portion élastique à une portion d'action rigide (58, 60) s'étendant parallèlement à l'axe du disque (30) pour solliciter élastiquement lesdits organes de friction (22, 24), ce ressort étant caractérisé en ce qu'une patte (100) déborde de la portion d'action rigide (58) de manière que, lorsque les organes de friction (22, 24) sont retirés du frein, cette patte (100) bute élastiquement sur une surface (101) du frein agencée pour maintenir la portion rigide (58) à l'écart d'un contact avec une partie fragile du frein.

2. Ressort selon la revendication 1, caractérisé en ce que la patte (100) déborde d'une extrémité libre (62) de la portion rigide (58) qui est adjacente au moteur de frein (32) pour maintenir cette portion rigide à l'écart d'un capuchon (103) en matière frangible formant partie du moteur de frein.

3. Ressort selon la revendication 2, caractérisé en ce que la patte (100) s'étend, sensiblement parallèlement à l'axe du disque, au-delà de l'extrémité libre adjacente (62) de la portion rigide (58), pour reposer sur une surface extérieure (101) du moteur de frein (32) quant les organes de friction sont retirés du frein, cette patte étant raccordée à cette extrémité libre par une partie de liaison (104) sensiblement radiale.

4. Ressort selon l'une quelconque des revendications 1 à 3, caractérisé en ce qu'une fente transversale (90) est découpée parallèlement à la portion rigide (58).

5. Ressort selon la revendication 4, caractérisé en ce que la patte (100) et la fente transversale (90) sont disposées de part et d'autre de cette portion rigide (58).

## Patentansprüche

1. Feder (40) für Scheibenbremse einer Bauart mit einem Bremssattel (10), der parallel zur Mittelachse einer um einen festen Träger (12) drehbaren Scheibe verschiebbar angebracht ist, und zwei Reibungselementen (12, 24), die in einer Öffnung des festen Trägers (12) verankert und verschiebbar aufgenommen werden, um bei Betätigung eines Bremsmotors (32) mit den gegenüberliegenden Seiten der Scheibe (30) in einen reibschlüssigen Eingriff gelangen, wobei die Feder (40) in einer der Wölbung des Bremssattels (10) ausgebildeten Öffnung (44) elastisch angebracht ist, um jedes der Reibungselemente zu belasten, wobei diese Feder von einem gebogenen Metallplättchen gebildet wird, die einen Montagebereich (42) aufweist, der über einen elastischen Bereich mit einem starren Wirkbereich (58, 60) verbunden ist, welcher sich parallel zur Mittelachse der Scheibe (30) erstreckt, um die Reibungselemente (22, 24) elastisch zu beanspruchen, wobei diese Feder dadurch gekennzeichnet ist, daß vom starren Wirkbereich (58) ein Haken (100) so hervorsteht, daß bei einem Zurückziehen der Reibungselemente (22, 24) von der Bremse dieser Haken (100) elastisch an einer Oberfläche (101) der Bremse anstößt, die angeordnet ist, um den starren Bereich (58) in einem Abstand von einer Berührung mit einem zerbrechlichen Teil der Bremse zu halten.

2. Feder gemäß Anspruch 1, dadurch gekennzeichnet, daß der Haken (100) von einem freien Ende (62) des starren Bereichs (58) hervorsteht, das an den Bremsmotor (32) angrenzt, um diesen starren Bereich in einem Abstand von einer einen Teil des Bremsmotors bildenden Kappe (103) aus zerbrechlichem Material zu halten.

3. Feder gemäß Anspruch 2, dadurch gekennzeichnet, daß sich der Haken (100) im wesentlichen parallel zur Mittelachse der Scheibe über das an den starren Bereich (58) angrenzende freie Ende (62) hinaus erstreckt, um auf einer Außenseite des Bremsmotors (32) aufzuliegen, wenn die Reibungselemente von der Bremse zurückgezogen werden, wobei dieser Haken mit dem freien Ende über einen im wesentlichen radialen Verbindungsteil (104) verbunden ist.

4. Feder gemäß einem der Ansprüche 1 bis 3, dadurch gekennzeichnet, daß parallel zum starren Bereich (58) ein transversaler Schlitz (90) ausgestanzt ist.

5. Feder gemäß Anspruch 4, dadurch gekennzeichnet, daß der Haken (104) und der transversale Schlitz (90) auf beiden Seiten des starren Bereichs (58) beiderseits dieses starren Bereichs (58) angeordnet sind.

## Claims

1. Spring (40) for a disc brake of the type having a caliper (10) mounted on a fixed support (12), slideably parallel to the axis of a rotating disc, and two friction members (22, 24) received in an anchored and slideable manner in an orifice in the said fixed support (12), in order to come into frictional engagement with the opposite faces of the said disc (30) during the actuation of a brake motor (32), the said spring (40) being mounted elastically in an orifice (44) made in the arch of the caliper (10) so as to load each of the friction members, this spring consisting of a bent metal leaf having a mounting portion (42) connected by means of an elastic portion to one rigidly acting portion (58, 60) extending parallel to the axis of the disc (30), in order to stress the said friction members (22, 24) elastically, this spring being characterized in that a lug (100) projects from the rigidly acting portion (58) in such a way that, when the friction members (22, 24) are removed from the brake, this lug (100) comes elastically up against a brake surface (101) designed to keep the rigid portion (58) away from contact with a fragile part of the brake.

2. Spring according to Claim 1, characterized in that the lug (100) projects from a free end (62) of the rigid portion (58) which is adjacent to the brake motor (32), in order to keep this rigid portion away from a cap (103) made of breakable material and forming part of the brake motor.

3. Spring according to Claim 2, characterized in that the lug (100) extends substantially parallel to the axis of the disc beyond the adjacent free end (62) of the rigid portion (58), to rest on an outer surface (101) of the brake motor (32) when the friction members are removed from the brake, this lug being connected to this free end by means of a substantially radial connecting part (104).

4. Spring according to any one of Claims 1 to 3, characterized in that a transverse slit (90) is cut out parallel to the rigid portion (58).

5. Spring according to Claim 4, characterized in that the lug (100) and the transverse slit (90) are arranged on either side of this rigid portion (58).

FIG_1

FIG_2

FIG_3

FIG_4

FIG. 5